# EUROPEAN PATENT APPLICATION

(11) **EP 4 819 489 A1**
(43) Date of publication of application: **07.10.2026**
(21) Application number: 26162056.1
(22) Date of filing: 03.03.2026
(51) Int. Cl.: H02S 50/00

(54) **PERFORMANCE MONITORING OF PHOTOVOLTAIC POWER GENERATION USING A REFERENCE POWER PREDICTION MODEL**

(30) Priority: 27.03.2025 IN 202521029286
(71) Applicant: Tata Consultancy Services Limited, Maharashtra (IN)
(72) Inventor: S, Abhinand, 411057 Pune, Maharashtra (IN); SUBRAMANIAN, Sivakumar, 411006 Pune, Maharashtra (IN); UNKANA, Venkataramana, 411028 Pune, Maharashtra (IN); AGRAWAL, Roshni, 411028 Pune, Maharashtra (IN); VENKATA MANIKANTA, Desu, 500032 Hyderabad, Telangana (IN)
(74) Representative: Goddar, Heinz J.

(57) **Abstract**

The present disclosure provides a system and method for performance monitoring of photovoltaic power generation using a reference power prediction model. In the present disclosure, a plurality of environmental data and a plurality of operational data of a PV power generation unit is received and preprocessed. Further, a clean reference PV power data and a reference irradiance value is obtained in absence of a GTI data in the plurality of the environmental data. However, in presence of the GTI data in the plurality of the environmental data, the clean reference PV power data is predicted using a power prediction model. Furthermore, a uniform value of a performance index for the PV generation unit is computed using a performance ratio for a predefined duration using an optimization framework. Performance monitoring of the PV power generation unit is performed by identifying a rising and a dropping pattern of the performance index.

## Description

### CROSS-REFERENCE TO RELATED APPLICATIONS AND PRIORITY

The present application claims priority to Indian application no. 202521029286 filed on March 27, 2025.

### TECHNICAL FIELD

The disclosure herein generally relates to the field of photovoltaic power generation, and, more particularly, to performance monitoring of photovoltaic power generation using a reference power prediction model.

### BACKGROUND

Global warming has led to a shift in focus towards renewable sources of energy such as solar and wind. Among renewable sources, solar energy has gained popularity as it can be deployed even in dry and desert areas where other resources may not be readily available. However, solar based energy production is highly dependent on environmental conditions and requires continuous monitoring and maintenance to maximize power output. To optimize the operations of a solar based power generation, it is important to understand how environmental variables such as irradiance and temperature affect solar power production. A solar based electricity generating system is prone to many temporal and permanent faults starting from power generating cell to energy storage units thus requiring deployment of photovoltaic (PV) monitoring systems. Timely detection and identification of a problem is necessary since PV system disruptions lead to gradual or sudden dip in power generated by the power plant.

Conventional fault detection techniques involving manual inspection of power plants are tedious and inefficient in detecting faults at large-scale utility sites. Further, few conventional automated fault detection techniques require special sensors or specialized devices that are expensive and require rigorous monitoring. Degradation of PV cells due to external factors require continuous monitoring that is difficult to achieve by manual inspection alone and requires an automated maintenance or monitoring solutions. Further, soiling which is a prevalent with site-specific variations poses challenges for photovoltaic (PV) systems, caused by factors such as accumulation of dust, organic materials, and other particles on PV surfaces. This deposition disrupts the transmission of sunlight to the PV cells, leading to decreased power output. Accurate prediction of soiling rate level and its impact on power generation is particularly challenging due to the complexity and variability inherent in the phenomena. Dust deposition rates and patterns can fluctuate based on factors such as weather changes, environmental events, or localized sources of pollution, making soiling a dynamic process that is difficult to model with conventional static methods. Similar reversible performance drops in solar power generation may occur due to factors such as snowing, shadows, and bird droppings each with their own variation dynamics.

### SUMMARY

Embodiments of the present disclosure present technological improvements as solutions to one or more of the above-mentioned technical problems recognized by the inventors in conventional systems. For example, in one embodiment, a processor implemented method is provided. The processor implemented method, comprising: receiving, via one or more hardware processors, a plurality of environmental data pertaining to a specific geographical location where a photovoltaic (PV) power generation unit is deployed using one or more data sources, and a plurality of operational data from the PV generation unit, wherein the plurality of environmental data comprises at least one of (i) a first set of environmental data and (ii) a second set of environmental data; preprocessing, via the one or more hardware processors, the plurality of environmental data and the plurality of operational data using one or more preprocessing techniques to obtain a plurality of preprocessed data, wherein step of preprocessing helps in filtering, synchronizing, and resampling (i) the plurality of environmental data and (ii) the plurality of operational data by identifying and eliminating a plurality of erroneous data from the plurality of environmental data and the plurality of operational data; performing, via the one or more hardware processors, based on a status indicative of a presence of the first set of environmental data, one of: (i) obtaining (a) a clean reference PV power data from the plurality of operational data received from the PV generation unit and (b) a reference global tilted irradiance (GTI) value, wherein the reference irradiance value is estimated using a power prediction model and the clean reference PV power; and (ii) predicting a clean reference PV power generated when the PV generation unit operates at its full potential by inputting the plurality of preprocessed data to the power prediction model; computing, via the one or more hardware processors, a uniform value of a performance index for the PV generation unit using a performance ratio for a predefined duration using an optimization framework, wherein the performance ratio represents a ratio of at least one of: (i) an actual power generated to the clean reference PV power by the PV generation unit, (ii) an effective GTI value to the reference GTI value, and (iii) an effective GTI value to a measured GTI value, wherein the performance index is used to quantify a plurality of degradation based losses occurring in the PV generation unit, and wherein the effective GTI value is computed using the power prediction model and the actual power generated by the PV generation unit; and identifying, via the one or more hardware processors, a rising pattern and a dropping pattern of the performance index for real time monitoring of the PV power generation unit.

In another aspect, a system is provided. The system comprising a memory storing instructions; one or more communication interfaces; and one or more hardware processors coupled to the memory via the one or more communication interfaces, wherein the one or more hardware processors are configured by the instructions to: receive a plurality of environmental data pertaining to a specific geographical location where a photovoltaic (PV) power generation unit is deployed using one or more data sources, and a plurality of operational data from the PV generation unit, wherein the plurality of environmental data comprises at least one of (i) a first set of environmental data and (ii) a second set of environmental data; preprocess the plurality of environmental data and the plurality of operational data using one or more preprocessing techniques to obtain a plurality of preprocessed data, wherein step of preprocessing helps in filtering, synchronizing, and resampling (i) the plurality of environmental data and (ii) the plurality of operational data by identifying and eliminating a plurality of erroneous data from the plurality of environmental data and the plurality of operational data; perform, based on a status indicative of a presence of the first set of environmental data, one of: (i) obtaining (a) a clean reference PV power data from the plurality of operational data received from the PV generation unit and (b) a reference global tilted irradiance (GTI) value, wherein the reference GTI value is estimated using a power prediction model and the clean reference PV power; and (ii) predicting a clean reference PV power generated when the PV generation unit operates at its full potential by inputting the plurality of preprocessed data to the power prediction model; compute a uniform value of a performance index for the PV generation unit using a performance ratio for a predefined duration using an optimization framework, wherein the performance ratio represents a ratio of at least one of: (i) an actual power generated to the clean reference PV power by the PV generation unit, (ii) an effective GTI value to the reference GTI value, and (iii) an effective GTI value to a measured GTI value, wherein the performance index is used to quantify a plurality of degradation based losses occurring in the PV generation unit, wherein the effective GTI value is computed using the power prediction model and the actual power generated by the PV generation unit; and identify a rising pattern and a dropping pattern of the performance index for real time monitoring of the PV power generation unit.

In yet another aspect, a non-transitory computer readable medium is provided. The non-transitory computer readable medium are configured by instructions for receiving a plurality of environmental data pertaining to a specific geographical location where a photovoltaic (PV) power generation unit is deployed using one or more data sources, and a plurality of operational data from the PV generation unit, wherein the plurality of environmental data comprises at least one of (i) a first set of environmental data and (ii) a second set of environmental data; preprocessing the plurality of environmental data and the plurality of operational data using one or more preprocessing techniques to obtain a plurality of preprocessed data, wherein step of preprocessing helps in filtering, synchronizing, and resampling (i) the plurality of environmental data and (ii) the plurality of operational data by identifying and eliminating a plurality of erroneous data from the plurality of environmental data and the plurality of operational data; performing, based on a status indicative of a presence of the first set of environmental data, one of: (i) obtaining (a) a clean reference PV power data from the plurality of operational data received from the PV generation unit and (b) a reference global tilted irradiance (GTI) value, wherein the reference irradiance value is estimated using a power prediction model and the clean reference PV power; and (ii) predicting a clean reference PV power generated when the PV generation unit operates at its full potential by inputting the plurality of preprocessed data to the power prediction model; computing a uniform value of a performance index for the PV generation unit using a performance ratio for a predefined duration using an optimization framework, wherein the performance ratio represents a ratio of at least one of: (i) an actual power generated to the clean reference PV power by the PV generation unit, (ii) an effective GTI value to the reference GTI value, and (iii) an effective GTI value to a measured GTI value, wherein the performance index is used to quantify a plurality of degradation based losses occurring in the PV generation unit, and wherein the effective GTI value is computed using the power prediction model and the actual power generated by the PV generation unit; and identifying a rising pattern and a dropping pattern of the performance index for real time monitoring of the PV power generation unit.

In accordance with an embodiment of the present disclosure, the one or more hardware processors are further configured by the instructions to send one or more alert notifications to one or more users when the performance index is expected to fall below a configurable threshold value such that a corrective action is performed to enhance performance of the PV generation unit.

In accordance with an embodiment of the present disclosure, the plurality of erroneous data comprises (i) one or more outliers, (ii) one or more errors and (iii) a set of inconsistent data obtained due to malfunctioning of one or more sensors of the PV generation unit and one or more datapoints with no sensor input.

In accordance with an embodiment of the present disclosure, the plurality of degradation based losses are segregated into a first category and a second category based on (i) the performance index profile and (ii) one or more age related factors of the PV generation unit.

In accordance with an embodiment of the present disclosure, the first category and the second category for segregating the plurality of degradation based losses represents a recoverable losses category and a non-recoverable losses category respectively.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an exemplary system for performance monitoring of photovoltaic (PV) power generation using a reference power prediction model, according to some embodiments of the present disclosure.
FIG. 2 illustrates an exemplary flow diagram illustrating a method for performance monitoring of photovoltaic power generation using the reference power prediction model, using the system of FIG. 1, in accordance with some embodiments of the present disclosure.
FIGS. 3A and 3B depict graphical representations illustrating power generation analysis for a PV generation unit dataset with and without preprocessing step respectively for performance monitoring of photovoltaic power generation using the reference power prediction model, according to some embodiments of the present disclosure.
FIG. 4 depicts a graphical representation illustrating a correlation between an irradiance and power generation for performance monitoring of photovoltaic power generation using the reference power prediction model, according to some embodiments of the present disclosure.
FIG. 5 is an exemplary flow diagram illustrating computation of effective irradiance for performance monitoring of photovoltaic power generation using the reference power prediction model, according to some embodiments of the present disclosure.
FIG. 6 depicts a graphical representation illustrating an expected profile of performance index variation of a photovoltaic (PV) surface for performance monitoring of photovoltaic power generation using the reference power prediction model, according to some embodiments of the present disclosure.
FIG. 7 depicts a graphical representation illustrating a performance index profile and projected performance index value predicted by multi variable time-series model, for performance monitoring of photovoltaic power generation using the reference power prediction model, according to some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following embodiments described herein.

There has been an increased focus towards renewable sources of energy such as solar and wind energy due to adverse environmental impact caused by extended use of fossil fuels for power production and other applications. Among renewable sources, solar energy has gained popularity as it can be deployed even in dry and desert areas where other resources may not be available. Solar based energy production is highly dependent on environmental conditions and requires continuous monitoring and maintenance to generate an optimal power output.

A solar based electricity generating system is prone to many temporal and permanent faults starting from power generating cell to energy storage units thus requiring deployment of Photovoltaic (PV) monitoring. Timely detection and identification of problems are necessary since disruption in a PV system lead to continuous or sudden dip in power generated. Conventional detection techniques involving manual inspection of the PV power plants are tedious and inefficient in detecting faults at large-scale utility sites. Further, few conventional automated fault detection techniques require special sensors or specialized devices that are expensive and require rigorous monitoring. Degradation on PV cells due to external factors requires continuous monitoring that is difficult to achieve by manual inspection alone and requires automatic maintenance or monitoring solutions.

Further, soiling, a persistent and site-specific challenge for photovoltaic (PV) systems, arises from the accumulation of dust, organic materials, and other particles on PV surfaces. This deposition disrupts the transmission of sunlight to the PV cells, leading to decreased power output. Characteristics of soiling, including its rate and types of particles involved, vary significantly with location. Arid regions, for instance, experience higher soiling rates due to minimal rainfall, while agricultural areas are prone to dust from soil and crop residues. Irregular cleaning of panels poses other threats such as cementation, formation of fungi and lichens, which can become irremovable, whereas harsh cleaning can lead to scratching or removal of coatings on PV glass surface.

Main challenge with degradation of PV panels is that it is a highly site-specific phenomenon. Each PV installation may experience different rates and patterns of soiling, influenced by local environmental factors such as wind speeds, rainfall, dust levels, and agricultural or industrial activities nearby. This variability makes it difficult to implement a one-size-fits-all solution to quantify effects of the degradation of PV panels. Instead, PV site operators must assess and customize their mitigation strategies based on real-time data specific to their site conditions. Thus, there is a need for continuous monitoring of the power loss attributable to the degradation of PV panels due to various temporal degradation factors. Without accurate and timely data on soiling severity, it is difficult to determine a best time for cleaning or maintenance. Cleaning too often leads to unnecessary costs, while cleaning less frequently can cause prolonged drops in power output, affecting the overall performance of the PV system. Moreover, decision to clean PV panels involves a trade-off between cost of cleaning and potential revenue loss due to reduced power output. Site operators must weigh these factors carefully to determine when it is economical to undertake cleaning or other maintenance actions. An effective strategy requires an ability to predict degradation profile accurately, understand how it evolves over time, and assess how much power is currently being lost. This requires robust and site-specific predictive models that can account for variability of environmental factors and provide actionable insights into when cleaning should be performed.

However, accurate prediction of degradation and its impact on power generation is particularly challenging due to complexity and variability inherent in the phenomenon. Dust deposition rates and patterns can fluctuate based on factors such as sudden weather changes, unexpected environmental events, or localized sources of pollution, making soiling a dynamic process that is difficult to model with static methods. As a result, there is a growing need for real-time monitoring systems that can continuously track performance of PV panels, measure degradation , and update predictive models based on current conditions.

There exist several systems for soiling quantification, but these require a specialized device that makes a direct comparison of an ideal output from a clean cell to the output from a regular cell. Conventional methods employ complex inputs and methodologies to take in precipitation, particulate matter concentration and other assumptions to make predictions on soiling. Further, conventional soiling quantification systems use a reference cell that is cleaned and maintained with no dust deposition on the surface and its power output is compared to the reference cell that is left uncleaned as other panels in the site. Ideally, material and make of clean and normal cells should be same as that of the panels used in the PV power generation unit being monitored for it to be fully dependable.

The present disclosure addresses the unresolved problems of the conventional approaches by providing a system that can take in minimal input variables and predict degradation rate and assess performance index of the photovoltaic system. Embodiments of the present disclosure provide a system and method for performance monitoring of photovoltaic power generation using a reference power prediction model. Dependence on specialized devices and their tedious maintenance is eliminated in the present disclosure. Input variables to the system of the present disclosure is minimal with need for basic environmental factors such as irradiance (e.g., Global tilted irradiance (GTI) or Global horizontal irradiance (GHI)) and temperature (e.g., ambient temperature or module temperature) being basic requirement that can come from measured data or satellite based data sources. The system of the present disclosure receives data such as inverter level power data and basic environmental variables to predict the performance index.

In other words, the system of the present disclosure does not require a clean cell or reference power and takes in basic variables that are easy to obtain. Other quantities are derived from processing basic inputs such as irradiance and temperature. So, a minimum model complexity is associated with the power prediction model of the present disclosure. Same environmental variables and inverter level power data are used by all modules in the system of the present disclosure. As degradation is quantified by environmental variables such as irradiance and temperature, GTI and module temperature are employed as input to a power prediction model to generate expected power generation. The power prediction model can incorporate any of physical models such as diode model, empirical equations or AI/ML regression models including Artificial Neural Networks (ANN) trained on data from the plant and predict a power generation potential at any intended time step. The power prediction model allows one to check deviations of the PV output from ideal operating condition and can address a challenge of how to obtain the clean reference cell power.

In the present disclosure, a challenge was to eliminate or classify input data into normal operation days (i.e., samples) and faulty operation days (i.e., samples). Performance index analysis requires data from regular operational days. The input data is preprocessed and classified exploiting a strong correlation between generated power with irradiance. A deviation of the data points from correlation profile is used to eliminate data from other abnormal operating conditions.

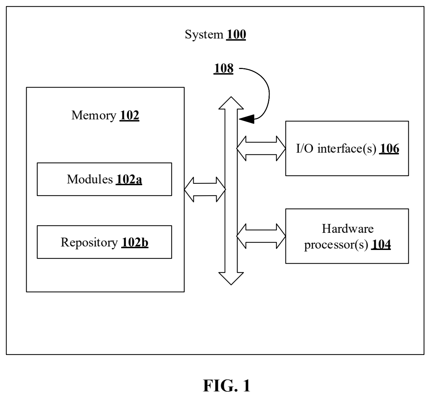

Referring now to the drawings, and more particularly to FIGS. 1 through 7, where similar reference characters denote corresponding features consistently throughout the figures, there are shown preferred embodiments and these embodiments are described in the context of the following exemplary system and/or method.

FIG. 1 illustrates an exemplary system for performance monitoring of photovoltaic (PV) power generation using a reference power prediction model, according to some embodiments of the present disclosure. In an embodiment, the system 100 includes or is otherwise in communication with one or more hardware processors 104, communication interface device(s) or input/output (I/O) interface(s) 106, and one or more data storage devices or memory 102 operatively coupled to the one or more hardware processors 104. The one or more hardware processors 104, the memory 102, and the I/O interface(s) 106 may be coupled to a system bus 108 or a similar mechanism.

The I/O interface(s) 106 may include a variety of software and hardware interfaces, for example, a web interface, a graphical user interface, and the like. The I/O interface(s) 106 may include a variety of software and hardware interfaces, for example, interfaces for peripheral device(s), such as a keyboard, a mouse, an external memory, a plurality of sensor devices, a printer and the like. Further, the I/O interface(s) 106 may enable the system 100 to communicate with other devices, such as web servers and external databases.

The I/O interface(s) 106 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface(s) 106 may include one or more ports for connecting a number of computing systems with one another or to another server computer. Further, the I/O interface(s) 106 may include one or more ports for connecting a number of devices to one another or to another server.

The one or more hardware processors 104 may be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In the context of the present disclosure, the expressions 'processors' and 'hardware processors' may be used interchangeably. In an embodiment, the system 100 can be implemented in a variety of computing systems, such as laptop computers, portable computer, notebooks, hand-held devices, workstations, mainframe computers, servers, a network cloud and the like.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 102 includes a plurality of modules 102a and a repository 102b for storing data processed, received, and generated by one or more of the plurality of modules 102a. The plurality of modules 102a may include routines, programs, objects, components, data structures, and so on, which perform particular tasks or implement particular abstract data types.

The plurality of modules 102a may include programs or computer-readable instructions or coded instructions that supplement applications or functions performed by the system 100. The plurality of modules 102a may also be used as, signal processor(s), state machine(s), logic circuitries, and/or any other device or component that manipulates signals based on operational instructions. Further, the plurality of modules 102a can be used by hardware, by computer-readable instructions executed by the one or more hardware processors 104, or by a combination thereof. Further, the memory 102 may include information pertaining to input(s)/output(s) of each step performed by the processor(s) 104 of the system 100 and methods of the present disclosure.

The repository 102b may include a database or a data engine. Further, the repository 102b amongst other things, may serve as a database or includes a plurality of databases for storing the data that is processed, received, or generated as a result of the execution of the plurality of modules 102a. Although the repository 102b is shown internal to the system 100, it will be noted that, in alternate embodiments, the repository 102b can also be implemented external to the system 100, where the repository 102b may be stored within an external database (not shown in FIG. 1) communicatively coupled to the system 100. The data contained within such external database may be periodically updated. For example, new data may be added into the external database and/or existing data may be modified and/or non-useful data may be deleted from the external database. In one example, the data may be stored in an external system, such as a Lightweight Directory Access Protocol (LDAP) directory and a Relational Database Management System (RDBMS). In another embodiment, the data stored in the repository 102b may be distributed between the system 100 and the external database.

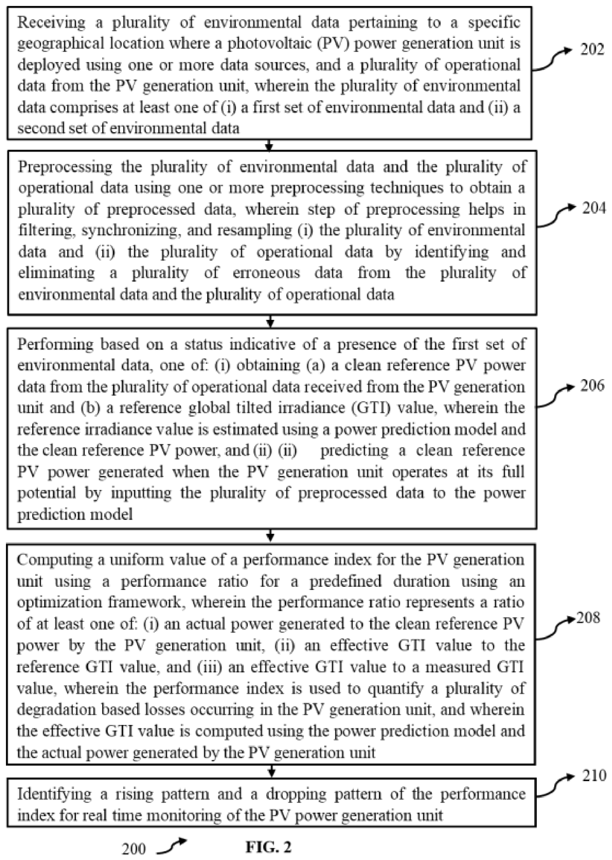

FIG. 2 illustrates an exemplary flow diagram illustrating a method for performance monitoring of photovoltaic power generation using the reference power prediction model, using the system 100 of FIG. 1, in accordance with some embodiments of the present disclosure.

Referring to FIG. 2, in an embodiment, the system(s) 100 comprises one or more data storage devices or the memory 102 operatively coupled to the one or more hardware processors 104 and is configured to store instructions for execution of steps of the method by the one or more processors 104. The steps of the method 200 of the present disclosure will now be explained with reference to components of the system 100 of FIG. 1, the flow diagram as depicted in FIG. 2, and one or more examples. Although steps of the method 200 including process steps, method steps, techniques or the like may be described in a sequential order, such processes, methods and techniques may be configured to work in alternate orders. In other words, any sequence or order of steps that may be described does not necessarily indicate a requirement that the steps be performed in that order. The steps of processes described herein may be performed in any practical order. Further, some steps may be performed simultaneously, or some steps may be performed alone or independently.

In an embodiment, at step 202 of the present disclosure, one or more hardware processors 104 are configured to receive (i) a plurality of environmental data pertaining to a specific geographical location where a photovoltaic (PV) power generation unit is deployed using one or more data sources, and (ii) a plurality of operational data from the PV generation unit. The one or more data sources may include but are not limited to one or more sensors, one or more satellite based data sources, and/ or the like. In an embodiment, a plurality of operational data from the PV generation unit comprises but is not limited to one or more inverter level power data measurements, a plurality of related data such as area covered by the PV system, technology specification, data obtained from the one or more sensors installed in the PV generation unit, and one or more input features determined based on type of an input problem statement, and/or the like. The plurality of environmental data comprises at least one of (i) a first set of environmental data and (ii) a second set of environmental data. The first set of environmental data may comprise global titled irradiance (GTI) data. The second set of environmental data may comprise but is not limited to temperature data including ambient temperature and module temperature, global horizontal irradiance (GHI) data, wind speed, cloud cover, precipitation, humidity, and/or the like. The one or more data sources may include but are not limited to one or more sensors, one or more satellite based data sources, and/ or the like.

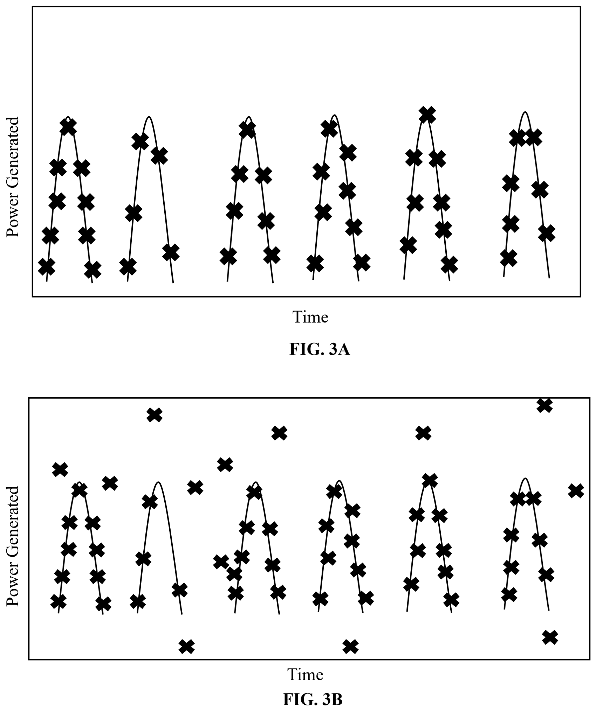

Further, at step 204 of the present disclosure, the one or more hardware processors 104 are configured to preprocess the plurality of environmental data and the plurality of operational data using one or more preprocessing techniques to obtain a plurality of preprocessed data. The step of preprocessing helps in filtering, synchronizing, and resampling (i) the plurality of environmental data and (ii) the plurality of operational data by identifying and eliminating a plurality of erroneous data from the plurality of environmental data and the plurality of operational data. The plurality of erroneous data comprises (i) one or more outliers, (ii) one or more errors and (iii) a set of mismatched data obtained due to malfunctioning of one or more sensors of the PV generation unit and one or more datapoints with no sensory input. The one or more datapoints with no sensory inputs may represent missing data in a time series data received. The plurality of environmental data and the plurality of operational data are received in raw form. The raw data is preprocessed to be converted into an appropriate data format that can be processed by the plurality of modules 102a and one or more units in the system of the present disclosure. For example, the data supplied from a data set, or a current data generated in situ supplied may be of different time stamp mixed in a random manner. Prior to any further analysis, there is a need for proper sorting of input data based on time, and segregation of the input data based on inverters present at a power generation site if multiple power generation sites are considered. Further, most information obtained as input includes sensor measurements which are prone to errors due to sensor failure, abrupt disruption, constant value error and missing data. Thus, basic outlier elimination techniques including but are not limited to IQR based elimination, constant value error detection and Mahalanobis distance methods are employed as an initial filter to remove data points with high error. FIGS. 3A and 3B depict graphical representations illustrating power generation analysis for a PV generation unit dataset with and without preprocessing step respectively for performance monitoring of photovoltaic power generation using the reference power prediction model, according to some embodiments of the present disclosure. It can be observed from FIGS. 3A and 3B that when an outlier depicted with a value farther away from normal operation range was removed, which if included could potentially corrupt the entire analysis.

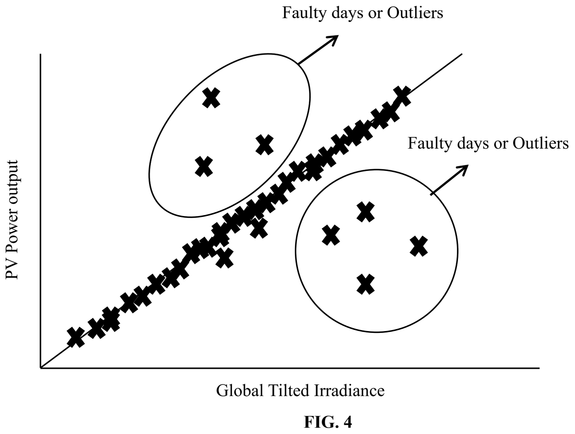

In an embodiment, power generation decreases gradually due to dust deposition and ageing of panels. Sudden faults and failure of components in the PV generation unit are a source of sudden disruption. The system of the present disclosure must be able to classify the faulty days from days of normal operation. The step of preprocessing enables capturing some regions of faulty data points and eliminating them. The faulty data points where power production reduces by a significant amount due to some minor electrical mismatch and connection losses are eliminated in the performance analysis. In an embodiment, irradiance received has a strong correlation to power generated by a plurality of PV panels in the PV power generation unit. The correlation between the irradiance and power generation is exploited for the step of preprocessing. FIG. 4 depicts a graphical representation illustrating a correlation between an irradiance and power generation for performance monitoring of photovoltaic power generation using the reference power prediction model, according to some embodiments of the present disclosure. The closeness of each data point to the ideal correlation curve of irradiance and power generated is analyzed for outlier elimination. As analyzed from FIG. 4, most of the data is correlated within a band of a near linear correlation. The data points that are away from observed correlation are not included in further performance analysis and are referred to as faulty PV system data that can be ignored for the main purpose of performance analysis here. The deviation of each data point is computed and regions are identified where they lie far from expected. A threshold is preset or determined using clustering analysis to classify each datapoint as faulty or fit for degradation assessment. This procedure is found to be reliable for removing both outliers and faulty data.

Further, at step 206 of the present disclosure, the one or more hardware processors 104 are configured to perform, based on a status indicative of a presence of the first set of environmental data, one of: (i) obtaining (a) a clean reference PV power data from the plurality of operational data received from the PV generation unit and (b) a reference global tilted irradiance (GTI) value, where the reference GTI value is estimated using a power prediction model and the clean reference PV power, and (ii) predicting a clean reference PV power generated when the PV generation unit operates at its full potential by inputting the plurality of preprocessed data to the power prediction model. This means that in absence of the first set of environmental data which is global tilted irradiance (GTI) data or while the GTI data is unavailable, an alternative is to maintain a set of PV panels connected to a single representative inverter clean to capture the clean reference PV power data. Thereby the clean reference PV power data obtained from this single inverter is used as full potential operating reference power production data, which can be used to estimate GTI using the reference power prediction model if necessary.

However, in cases where GTI data is available, the power prediction model is used to predict the clean reference PV power which is expected to be produced by the PV power generation unit if it is operating to its full potential. Numerous models are built that can separately or simultaneously predict the expected clean reference PV power generated by the PV power generation unit accurately. In other words, the power prediction models could be, but not limited to, a physics-based model, a semi-physical model formed based on equations combining empirical and physical relation, machine learning or artificial intelligence based (ML/AI) based models, and/or the like. Any of these models whose coefficients are well tuned with sufficient training data can provide the clean reference PV power. The physics-based model utilizes fundamental principles of semiconductor physics to describe how solar cells convert sunlight into electricity. Physics-based models typically use equivalent circuit representations to simulate behavior of a solar cell, integrating physical properties. A one-diode model is one of the simplest physics-based models, representing a solar cell as an equivalent circuit. The circuit consists of a current source (*Iₚₕ*) representing photocurrent, diode to simulate p-n junction behavior, shunt resistance (*Rₛ*) to account for internal resistance losses and shunt resistance (*Rₛₕ*) to model leakage across the p-n junction. The one-diode model can predict key performance metrices such as current voltage characteristics and also power voltage characteristics from which the power generated can be extracted for further processing. The current voltage characteristics are represented by equation (1) $I = {I}_{ph} - {I}_{0} \left({e}^{\left(\frac{V + I . {R}_{s}}{{nV}_{t}}\right)}-1\right) - \frac{V + I . {R}_{s}}{{R}_{sh}}$ (1)

The semi-physical models, such as King's equation, are hybrid models that combine empirical data with physical principles to predict PV power output of the PV power generation unit. Unlike purely physics-based models that rely heavily on detailed physics of solar cells, semi-physical models use a combination of experimental observations and simplified physical relations. King's model is one of the most widely used semi-physical models for predicting the power output of PV modules. This model accounts for effect of environmental factors, such as irradiance and temperature, on the performance of PV modules. Machine learning/artificial intelligence (ML/AI) models offer powerful tools for predicting the clean reference PV power data by learning patterns from large datasets of environmental conditions and system performance. Techniques like artificial neural networks (ANNs), support vector machine (SVMs), Random Forests, and long short term memory networks (LSTMs) have been successfully applied for both short-term and long-term PV power forecasting. However, they require large datasets, computational resources, and careful tuning to achieve high accuracy. The ML/AI model can be trained on operational data from the clean reference power gathered from a particular site to predict the clean reference PV power that can be generated for a particular irradiance and temperature value. The model requires sufficient data for training and the accuracy of prediction depends on the quality of training data set supplied. The models may be periodically or continuously updated as more and more data becomes available.

In an embodiment, in the present disclosure, performance of the PV panel and a variation associated in the PV power generation unit is assessed for a particular duration. Direct comparison of each duration based on the power generation alone is not meaningful as environmental variables are varying continually for each instance of time. The system of the present disclosure requires basic input variables such as GTI and module temperature for further processing and other environmental factors can be safely ignored or deduced from the power prediction model without affecting accuracy. A GTI measurement input from PV site is important and the power prediction model is further enhanced if module temperature is also available. In the absence of module temperature, it may be predicted using a pre-trained physics-based, AI/ML model, or a hybrid model typically with variables such as ambient temperature, power generated, and windspeed as inputs. Identification of input type by user (e.g., ambient or module) and appropriate conversion operations are performed in the present disclosure. GTI measurement is a simple solution that can address the need for sophisticated hardware for soiling quantification and tedious maintenance of the same. In absence of both GTI measurement and clean reference power inverter data, some existing models can be used to build GTI from satellite GHI data even though they may be less preferred due to the potential errors that such approximations may introduce. Conventional models such as Hay Davies, Isotropic or Kulcher can be used to calculate the GTI from GHI values. For temperature conversion, ambient to module temperature conversion has a strong correlation that can be readily modelled for a particular PV generation site. Detailed physics-based approaches exist that can be used to predict the module temperature and its variations in PV systems. The ML/AI can also be harnessed to model the module temperature as a function of environmental variables, PV configuration parameters, and operating variables from the generation unit.

Furthermore, at step 208 of the present disclosure, the one or more hardware processors 104 are configured to compute a uniform value of a performance index for the PV generation unit using a performance ratio for a predefined duration using an optimization framework. The performance ratio represents a ratio of at least one of: (i) an actual power generated to the clean reference PV power by the PV generation unit, (ii) an effective GTI value to the reference GTI value, and (iii) an effective GTI value to a measured GTI value. The computation of performance index is represented by equations (2), (3), and (4) below: $Peformance index = \frac{Actual power generated}{Clean reference PV power}$ (2) $Peformance index = \frac{Effective GTI value}{Reference GTI value}$ (3) $Peformance index = \frac{Effective GTI value}{MeasuredGTI value}$ (4) The predefined duration for which performance ratio is estimated could be but not limited to an hour, a day, and/or the like. An important factor to be considered in selecting the predefined duration is that there would not be a substantial change in efficiency of the PV panels due to factors like soiling and a single performance index could be used to assess this predefined period. The uniform value of the performance ratio for the predefined duration is obtained by aggregating performance indexes corresponding to a plurality of time slots within the predefined duration. Considering a scenario where the predefined time window is 1 day and data interval is 1 hour, a first representative (aggregate) value of the performance index obtained for day 1 is *P*₁ and expected to be a constant for all hourly data points of the day but estimated from the hourly estimates. In a similar way, *n* values of performance indexes are obtained for *n* days determined with an assumption that there is no intraday variation of performance index. As given in Equations (2) to (4) that define equivalents of the performance index, the performance ratio is defined as the ratio of effective GTI to the GTI measured or GTI reference obtained or defined as the ratio of actual power generated to clean reference power. This allows the users to track the degradation in the system due to factors like soiling. Optimization based framework are employed to estimate an aggregate performance index for a given duration, for example, a daily performance index from the indices estimated for every hour. GTI is a quantity representing the amount of irradiance falling on the PV surface and can be measured by instruments like pyranometer. When measured GTI data is unavailable and clean PV power data is available, the power generation equation (e.g., King's equation (5)) can be used to back calculate the GTI value from the clean power data. This calculation may require iterative procedures like Newton-Ralphson algorithm to compute the reference GTI also can be referred as estimated GTI. In one embodiment, when the least square based optimization technique is used as optimization algorithm and King's equation is used as a power prediction equation for PV system, the formulation of a problem for obtaining aggregated performance index on a daily level is expressed using equation (5) below. ${P}^{P} = G ∗ \left(\begin{matrix}{P}_{\left\{STC\right\}} + {K}_{1} ∗ ln \left(G\right) + {K}_{2} ∗ ln {\left(G\right)}^{2} + {K}_{3} ∗ T + {K}_{4} ∗ T ∗ ln \left(G\right) + {K}_{5} ∗ T ∗ \\ ln {\left(G\right)}^{2} + {K}_{6} ∗ {T}^{2}\end{matrix}\right)$ (5) Here, *P^{a}* represents the actual power generated by PV system, G represents the measured or estimated GTI, *P^{P}* represents the predicted power provided by the power prediction model for G, *G^{E}* represent the effective GTI, and *T* represent the module temperature. Equation (5) has seven coefficients *P*{*_{STC}*}, *K*₁, *K*₂, *K*₃, *K*₄, *K*₅ and *K*₆ that depend on the PV technology and capacity deployed for the PV generation site. One diode model can be designed from PV technological parameters and can be used to predict the clean reference power that could be generated for a particular value of GTI and the module temperature. This data can be used to train equation (5) to determine the seven fixed coefficients so that the equation is calibrated to predict the clean reference power for any input GTI and module temperature of the PV panel. Similar to the methodology described earlier for computing estimate of GTI *(G),* the *G^{E}* can be determined using the same approach. However, in this case, the actual power output *P^{a}* should be used instead of the clean reference power when calculating the *G^{E}.* In the present disclosure, the uniform value of the performance index (*Z_{τ}*) for duration, *τ* (say, a day) is estimated from the measured or estimated GTI samples within the duration (say, hourly *Gᵢ*), module temperature (*Tᵢ*), and power generated within this duration $\left({P}_{i}^{a}\right)$. Before proceeding to the optimization problem, the effective irradiance $\left({G}_{i}^{E}\right)$ is computed for all *i,* using ${P}_{i}^{a}$ and *Tᵢ*. This effective irradiance is further used to estimate performance index (*Z_{τ}*) based on the measured or estimated GTI by solving the following optimization problem: ${min}_{\left({Z}_{τ}\right)} {\sum }_{i ∈ τ} {e}_{i}^{2}$ (6) $s . t . : {e}_{i} = {G}_{i}^{E} - {Z}_{τ} ∗ {G}_{i}$ (7) ${Z}_{l} < {Z}_{τ} < {Z}_{u}$ (8) Here, *Z_{τ}* is a single constant value that represents the duration *τ*, *Zₗ* and *Zᵤ* represent a lower bound of performance index and an upper bound of performance index respectively for the PV panel. The bounding value may depend on season, the PV technology, dusting level and/or the like. Summation is performed for all sub-aggregates *eᵢ* values within the duration r over which the aggregated uniform value of the performance index is to be obtained. *Z_{τ}* captures the inefficiency affecting the output of the PV power generation unit due to factors such as soiling, one or more temporary losses, and/or the like. Typically, the maximum attainable value for performance index is 1, when the panel is fully clean and effective felt GTI of the panel matches the estimate GTI. If the reference power prediction model does not capture the peak performance, we may encounter values more than 1. It is important to keep the reference power prediction model constant in analyzing the data so that the relative drops and recoveries can be fully understood irrespective of actual value of the performance index itself.

The *G^{E}* by a PV panel varies from actual GTI due to layers of contamination on surface of the PV panel or other temporary phenomena like snowing, shading, and/or the like. Alternatively, the performance index is identified as the ratio of actual power generated to clean reference power predicted or measured by solving the following optimization problem: ${min}_{\left({Z}_{τ}\right)} {\sum }_{i ∈ τ} {e}_{i}^{2}$ (9) s.t ${e}_{i} = {P}_{i}^{a} - {Z}_{τ} ∗ {P}_{i}^{p}$ (10) ${Z}_{l} < {Z}_{τ} < {Z}_{u}$ (11) The summation is carried out for all individual time stamp values *eᵢ* within the duration *τ*, over which the aggregated uniform value of the performance index is to be calculated. *Z_{τ}* is assumed to be a constant in this period *τ*. The bounding condition and constraint remain same for both GTI based and power-based optimization.

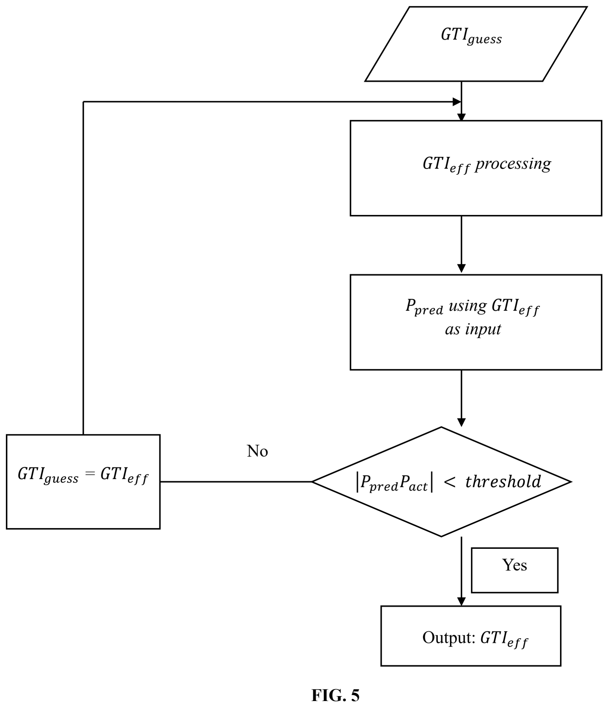

In an embodiment, the effective irradiance value is computed using the power prediction model and the actual power generated by the PV generation unit. FIG. 5 is an exemplary flow diagram illustrating computation of effective irradiance for performance monitoring of photovoltaic power generation using the reference power prediction model, according to some embodiments of the present disclosure. As shown in FIG. 5, the methodology for obtaining effective irradiance computationally from the power prediction model and actual power generated data is an iterative process. An initial guess for *GTI_{effective}* is assumed to predict the power produced using the power prediction model. In subsequent iterations, *GTI_{effective}* is adjusted using a method like Newton-Ralphson to minimize any discrepancy between the power predicted using the reference power prediction model and the measured power until they match within a tolerance. On successful convergence, the *GTI_{effective}* is obtained.

A classification procedure is used to separate the two type of degradation losses and analyze how both the degradation losses evolve. Separate profile is generated for relatively fast changing performance index (alternatively referred as degradation index and cleaning index through the description) and relatively slow changing ageing-based degradation. The drop in the performance index is contributed by two groups of factors: a) reversible and fast changing factors like soiling, snowing, shadows, and/ or the like. and b) slow drops caused by factors like aging. Their duration based analysis can be exploited to separate out these two contributions from the observed performance index profiles. The performance index is used to quantify a plurality of degradation based losses occurring in the PV generation unit. The plurality of degradation based losses are segregated into a first category and a second category based on (i) the performance index profile, and (ii) one or more age related factors of the PV generation unit. The first category and the second category losses for segregating the plurality of degradation based represent a recoverable losses category and a non-recoverable losses category, respectively. The recoverable losses may include losses occurring due to factors like soiling and snowing that can be recovered after cleaning. However, the non-recoverable are permanent losses that may include losses occurring due to ageing which cannot be recovered. By examining, maximum attainable cleaning index values following cleaning events, a gradual, long-term decline is observed that indicates aging of the PV cells themselves. This degradation, which persists even after cleaning, highlights an impact of inherent material degradation processes within the panel. Through this principle, degradation due to panel aging can be distinguished from soiling-induced losses.

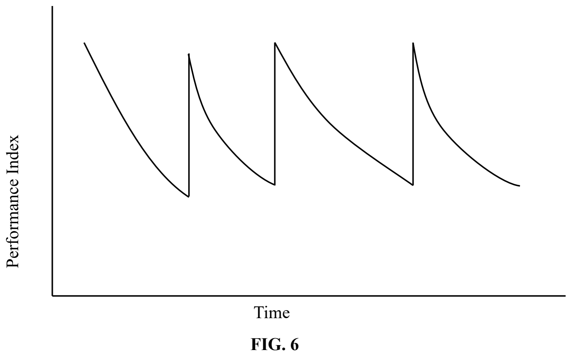

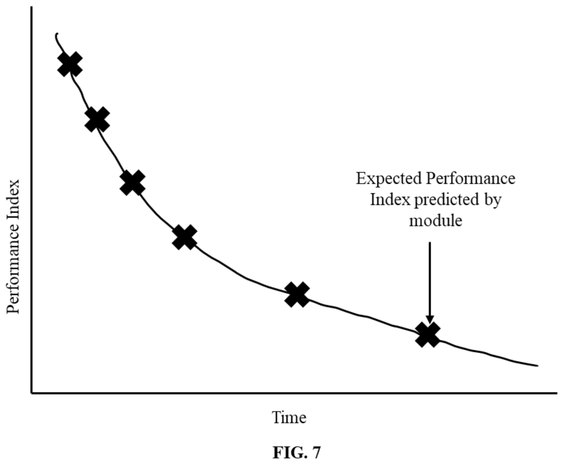

Referring to FIG. 2, at step 210 of the present disclosure, the one or more hardware processors 104 are configured to identify a rising and a dropping pattern of the performance index for real time monitoring of the PV power generation unit. FIG. 6 depicts a graphical representation illustrating an expected profile of performance index variation of a photovoltaic (PV) surface for performance monitoring of photovoltaic power generation using the reference power prediction model, according to some embodiments of the present disclosure. Daily soiling accumulation causes a measurable decrease in the performance index which is a metric used to quantify PV cleanliness and power output performance. When a natural or manual cleaning event occurs, such as rainfall or scheduled maintenance, a spike in the performance index is observed, temporarily restoring the PV power generation unit's performance to near-perfect levels. Some of the PV generation sites may also have automated cleaning systems that may be scheduled to clean periodically or could be triggered by a monitoring system that can recommend cleaning once the panel performance level drops below a threshold. A degradation plot spanning multiple seasons or years offers insights into the rate and nature of degradation over time. Primary factors influencing this degradation process are soiling and precipitation patterns, with soiling related performance decrease typically aligning with periods of little or no rainfall, and performance recovery occurring post-precipitation or cleaning events. By quantifying the performance ratio, or the proportion of power loss attributable to surface contamination, maintenance team can plan optimized cleaning schedules for reducing operational costs. To facilitate long-term tracking and analysis, a database can be established to store historical performance index values and other performance metrics from the monitoring system. This database serves as a valuable resource for calculating and storing indices related to degradation and soiling, enabling segregation of aging-related losses from soiling-induced losses. Including outlier eliminated raw data in database allows to identify "faulty" or anomalous days where factors other than soiling or aging may have impacted performance, enhancing the accuracy of future analyses and operational decisions. The plurality of preprocessed data could also be stored for future comparisons and advanced diagnostics, enabling ongoing studies to refine and adapt maintenance strategies according to evolving performance trends. As shown in FIG. 6, the daily performance index profile is expected to follow a trend with degradation occurring slowly with a quick recovery occurring due to cleaning events. A natural profile coming out of analysis can be inspected to verify if the profile exhibits soiling profile nature. It may happen that the plot is over-populated and appear noisy due to large number of data points and inaccurate sensor information. A trend can be super-imposed to identify a smooth expected pattern representing the profile of the performance index. Even a simple procedure like moving averages may help see a better pattern in the data. The soiling of the PV system happens gradually, so choosing an appropriate time window is important to avoid data clutter while still accurately quantifying and capturing the degradation process. A uniform value over a shorter duration can capture the panel's performance potential without compromising accuracy and offer a clearer view of the long-term degradation. In an embodiment, the power prediction model is capable to predict a possible soiling level for subsequent days from performance history trend for the PV panel. The profile followed while the rising pattern and the dropping pattern of the performance index is analyzed and the possible performance index or soiling level for next day is estimated mathematically assuming no cleaning event occurred that can recover the power producing potential. FIG. 7 depicts a graphical representation illustrating performance index profile and next day performance index value predicted by multi variable regression, for performance monitoring of photovoltaic power generation using the reference power prediction model, according to some embodiments of the present disclosure.

In an embodiment, the one or more hardware processors are configured to send one or more alert notifications to one or more users when the performance index is expected to fall below a configurable threshold value such that a corrective action is performed to enhance performance of the PV generation unit. The configurable threshold value is site specific and depends on factors such as cleaning cost of the area, cleaning method, electricity price of the region, utility scale, and/or the like. The configurable threshold value varies from site to site and not a fixed universal value. A progressive decline in daily performance index provides a clear signal of accumulating layer of dust, snow, and/or the like on panel surface. By monitoring this index, an advisory cleaning signal system can be implemented to alert operators when the performance index approaches the predefined threshold value. Once this predefined threshold value is reached, indicating a critical drop in performance due to soiling, an alert is automatically triggered for manual intervention, notifying maintenance teams to perform cleaning operations. This approach can be especially beneficial in minimizing performance losses in locations where high soiling rates coincide with limited natural cleaning events.

The written description describes the subject matter herein to enable any person skilled in the art to make and use the embodiments. The scope of the subject matter embodiments is defined herein and may include other modifications that occur to those skilled in the art. Such other modifications are intended to be within the scope of the present disclosure if they have similar elements that do not differ from the literal language of the embodiments or if they include equivalent elements with insubstantial differences from the literal language of the embodiments described herein.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated herein by the following claims.

## Claims

1. A processor implemented method (200), comprising:
receiving (202), via one or more hardware processors, a plurality of environmental data pertaining to a specific geographical location where a photovoltaic (PV) power generation unit is deployed using one or more data sources, and a plurality of operational data from the PV generation unit, wherein the plurality of environmental data comprises at least one of (i) a first set of environmental data and (ii) a second set of environmental data;
preprocessing (204), via the one or more hardware processors, the plurality of environmental data and the plurality of operational data using one or more preprocessing techniques to obtain a plurality of preprocessed data, wherein step of preprocessing helps in filtering, synchronizing, and resampling (i) the plurality of environmental data and (ii) the plurality of operational data by identifying and eliminating a plurality of erroneous data from the plurality of environmental data and the plurality of operational data;
performing (206), via the one or more hardware processors, based on a status indicative of a presence of the first set of environmental data, one of:
(i) obtaining (a) a clean reference PV power data from the plurality of operational data received from the PV generation unit and (b) a reference global tilted irradiance (GTI) value, wherein the reference irradiance value is estimated using a power prediction model and the clean reference PV power; and
(ii) predicting a clean reference PV power generated when the PV generation unit operates at its full potential by inputting the plurality of preprocessed data to the power prediction model;
computing (208), via the one or more hardware processors, a uniform value of a performance index for the PV generation unit using a performance ratio for a predefined duration using an optimization framework, wherein the performance ratio represents a ratio of at least one of: (i) an actual power generated to the clean reference PV power by the PV generation unit, (ii) an effective GTI value to the reference GTI value, and (iii) an effective GTI value to a measured GTI value, wherein the performance index is used to quantify a plurality of degradation based losses occurring in the PV generation unit, and wherein the effective GTI value is computed using the power prediction model and the actual power generated by the PV generation unit; and
identifying (210), via the one or more hardware processors, a rising pattern and a dropping pattern of the performance index for real time monitoring of the PV power generation unit.

2. The processor implemented method as claimed in claim 1, comprising:
sending, one or more alert notifications to one or more users when the performance index is expected to fall below a configurable threshold value such that a corrective action is performed to enhance performance of the PV generation unit.

3. The processor implemented method as claimed in claim 1, wherein the plurality of erroneous data comprises (i) one or more outliers, (ii) one or more errors and (iii) a set of inconsistent data obtained due to malfunctioning of one or more sensors of the PV generation unit and one or more datapoints with no sensor input.

4. The processor implemented method as claimed in claim 1, wherein the plurality of degradation based losses are segregated into a first category and a second category based on (i) the performance index profile and (ii) one or more age related factors of the PV generation unit.

5. The processor implemented method as claimed in claim 4, wherein the first category and the second category for segregating the plurality of degradation based losses represents a recoverable losses category and a non-recoverable losses category respectively.

6. A system (100), comprising:
a memory (102) storing instructions;
one or more communication interfaces (106); and
one or more hardware processors (104) coupled to the memory (102) via the one or more communication interfaces (106), wherein the one or more hardware processors (104) are configured by the instructions to:
receive a plurality of environmental data pertaining to a specific geographical location where a photovoltaic (PV) power generation unit is deployed using one or more data sources, and a plurality of operational data from the PV generation unit, wherein the plurality of environmental data comprises at least one of (i) a first set of environmental data and (ii) a second set of environmental data;
preprocess the plurality of environmental data and the plurality of operational data using one or more preprocessing techniques to obtain a plurality of preprocessed data, wherein step of preprocessing helps in filtering, synchronizing, and resampling (i) the plurality of environmental data and (ii) the plurality of operational data by identifying and eliminating a plurality of erroneous data from the plurality of environmental data and the plurality of operational data;
perform, based on a status indicative of a presence of the first set of environmental data, one of:
(i) obtaining (a) a clean reference PV power data from the plurality of operational data received from the PV generation unit and (b) a reference global tilted irradiance (GTI) value, wherein the reference GTI value is estimated using a power prediction model and the clean reference PV power; and
(ii) predicting a clean reference PV power generated when the PV generation unit operates at its full potential by inputting the plurality of preprocessed data to the power prediction model;
compute a uniform value of a performance index for the PV generation unit using a performance ratio for a predefined duration using an optimization framework, wherein the performance ratio represents a ratio of at least one of: (i) an actual power generated to the clean reference PV power by the PV generation unit, (ii) an effective GTI value to the reference GTI value, and (iii) an effective GTI value to a measured GTI value, wherein the performance index is used to quantify a plurality of degradation based losses occurring in the PV generation unit, wherein the effective GTI value is computed using the power prediction model and the actual power generated by the PV generation unit; and
identify a rising pattern and a dropping pattern of the performance index for real time monitoring of the PV power generation unit.

7. The system as claimed in claim 6, wherein the one or more hardware processors are further configured by the instructions to:
send one or more alert notifications to one or more users when the performance index is expected to fall below a configurable threshold value such that a corrective action is performed to enhance performance of the PV generation unit.

8. The system as claimed in claim 6, wherein the plurality of erroneous data comprises (i) one or more outliers, (ii) one or more errors and (iii) a set of inconsistent data obtained due to malfunctioning of one or more sensors of the PV generation unit and one or more datapoints with no sensor input.

9. The system as claimed in claim 6, wherein the plurality of degradation based losses are segregated into a first category and a second category based on (i) the performance index profile and (ii) one or more age related factors of the PV generation unit.

10. The system as claimed in claim 9, wherein the first category and the second category for segregating the plurality of degradation based losses represents a recoverable losses category and a non-recoverable losses category respectively.

11. One or more non-transitory machine-readable information storage mediums comprising one or more instructions which when executed by one or more hardware processors cause:
receiving a plurality of environmental data pertaining to a specific geographical location where a photovoltaic (PV) power generation unit is deployed using one or more data sources, and a plurality of operational data from the PV generation unit, wherein the plurality of environmental data comprises at least one of (i) a first set of environmental data and (ii) a second set of environmental data;
preprocessing the plurality of environmental data and the plurality of operational data using one or more preprocessing techniques to obtain a plurality of preprocessed data, wherein step of preprocessing helps in filtering, synchronizing, and resampling (i) the plurality of environmental data and (ii) the plurality of operational data by identifying and eliminating a plurality of erroneous data from the plurality of environmental data and the plurality of operational data;
performing, based on a status indicative of a presence of the first set of environmental data, one of:
(i) obtaining (a) a clean reference PV power data from the plurality of operational data received from the PV generation unit and (b) a reference global tilted irradiance (GTI) value, wherein the reference GTI value is estimated using a power prediction model and the clean reference PV power; and
(ii) predicting a clean reference PV power generated when the PV generation unit operates at its full potential by inputting the plurality of preprocessed data to the power prediction model;
computing a uniform value of a performance index for the PV generation unit using a performance ratio for a predefined duration using an optimization framework, wherein the performance ratio represents a ratio of at least one of: (i) an actual power generated to the clean reference PV power by the PV generation unit, (ii) an effective GTI value to the reference GTI value, and (iii) an effective GTI value to a measured GTI value, wherein the performance index is used to quantify a plurality of degradation based losses occurring in the PV generation unit, wherein the effective GTI value is computed using the power prediction model and the actual power generated by the PV generation unit; and
identifying a rising pattern and a dropping pattern of the performance index for real time monitoring of the PV power generation unit.

12. The one or more non-transitory machine-readable information storage mediums as claimed in claim 11, comprising:
sending, one or more alert notifications to one or more users when the performance index is expected to fall below a configurable threshold value such that a corrective action is performed to enhance performance of the PV generation unit.

13. The one or more non-transitory machine-readable information storage mediums as claimed in claim 11, wherein the plurality of erroneous data comprises (i) one or more outliers, (ii) one or more errors and (iii) a set of inconsistent data obtained due to malfunctioning of one or more sensors of the PV generation unit and one or more datapoints with no sensor input.

14. The one or more non-transitory machine-readable information storage mediums as claimed in claim 11, wherein the plurality of degradation based losses are segregated into a first category and a second category based on (i) the performance index profile and (ii) one or more age related factors of the PV generation unit.

15. The one or more non-transitory machine-readable information storage mediums as claimed in claim 14, wherein the first category and the second category for segregating the plurality of degradation based losses represents a recoverable losses category and a non-recoverable losses category respectively.
